# EUROPÄISCHE PATENTSCHRIFT

(11) **EP 1 597 498 B1**
(45) Veröffentlichungstag und Bekanntmachung des Hinweises auf die Patenterteilung: **30.08.2006**
(21) Anmeldenummer: 04715303.6
(22) Anmeldetag: 27.02.2004
(51) Int. Cl.: F16J 15/08

(54) **ZYLINDERKOPFDICHTUNG**
CYLINDER HEAD SEAL RING
JOINT D'ETANCHEITE POUR CULASSE DE CYLINDRE

(30) Priorität: 28.02.2003 DE 10310014
(43) Veröffentlichungstag der Anmeldung: 23.11.2005
(73) Patentinhaber: REINZ-Dichtungs-GmbH, 89233 Neu-Ulm (DE)
(72) Erfinder: DUCKEK, Uwe, 89134 Markbronn (DE); UNSELD, Günther, 89189 Neenstetten (DE); WALDVOGEL, Johann, 86381 Krumbach (DE)
(74) Vertreter: Pfenning, Meinig & Partner GbR
(86) Internationale Anmeldenummer: PCT/EP2004/001963
(87) Internationale Veröffentlichungsnummer: WO 2004/076893

(56) Entgegenhaltungen:
- EP-A- 0 581 615
- EP-A- 0 780 604
- EP-A- 0 816 722
- WO-A-01/96768
- CH-A- 268 267
- US-A- 4 803 965
- US-A- 4 834 399
- US-A- 5 199 723
- US-A- 5 685 547
- PATENT ABSTRACTS OF JAPAN vol. 011, no. 333 (M-637), 30. Oktober 1987 (1987-10-30) & JP 62 113968 A (YUUSAN GASKET KK), 25. Mai 1987 (1987-05-25)

## Beschreibung

Die Erfindung betrifft eine Zylinderkopf-Flachdichtung nach dem Oberbegriff des Anspruchs 1.

Aus der WO 01/96768 A1 ist eine Flachdichtung aus mindestens einer metallischen Lage bekannt, die insbesondere als Zylinderkopfdichtung ausgebildet ist. Die Dichtung enthält mindestens eine Zylinderdurchgangsöffnung. Um eine hohe Dichtwirkung auch über eine längere Betriebsdauer zu erhalten, ist die Zylinderdurchgangsöffnung vollständig von einer in der oder mindestens einer von mehreren metallischen Lagen ausgebildeten Sicke umgeben. Um zu verhindern, dass die Sicke plastisch so stark verformt wird, dass sie ihre gesamte Elastizität verliert, ist ein Verformungsbegrenzer vorgesehen, der bei der bekannten Flachdichtung die Form einer wellen-, trapez-und/oder sägezahnförmigen Profilierung um die Durchgangsöffnung herum hat. Hierbei ist die Profilierung zumindest auf einer Seite benachbart zur Sicke angeordnet, wobei die Sicke auch in die Profilierung integriert sein kann.

Damit die gewünschte Dichtwirkung erzielt wird, wird der Zylinderkopf unter hohen Druckkräften auf den Zylinderblock aufgeschraubt. Die entsprechenden Gewinde- bzw. Durchgangslöcher befinden sich von der jeweiligen Zylinderdurchgangsöffnung aus betrachtet auf der gegenüberliegenden Seite der Sicke bzw. Profilierung. Daher bestellt die Gefahr, dass der Zylinderkopf sich bei hohen Anzugskräften übermäßig verzieht und sich schlimmstenfalls sogar Risse bilden. Dies wird durch die einseitige Profilierung noch begünstigt.

Um dieses Problem zu lösen, ist aus der EP 0 581 615 A1 eine dreilagige Zylinderkopfdichtung aus Metall bekannt, deren mittlere Lage jeweils eine die Zylinderdurchgangsöffnungen umgebende Sicke sowie jeweils eine benachbart und parallel zu den Längsenden verlaufende Sicke aufweist. Hier besteht jedoch die Gefahr eines Verlustes der Elastizität dieser Dichtung.

Weiterhin ist aus der EP 0 927 844 A2 eine einlagige Zylinderkopfdichtung aus Metall bekannt, die ebenfalls mit jeweils einer die Zylinderdurchgangsöffnungen umgebenden Sicke versehen ist und die in den Eckbereichen aufgelegte Keile trägt, die einen Verzug des Zylinderkopfes verhindern sollen, Dieser kann jedoch nur verringert, nicht jedoch ausgeschlossen werden, da die Sicke flexibel ist und die Keile starr sind. Zusätzlich stellen die Keile eigenständig hergestellte Elemente dar, so dass die Fertigungskosten dieser Zylinderkopfdichtung relativ hoch sind.

Aus der US 4,834,399 ist eine metallische Zylinderkopfdichtung bekannt, bei der brennraumseitig ein Stopper in Form eines umgefalzten Blechs sowie eine Sicke angeordnet ist. Ein zusätzliches Dichtelement ist im Bereich von Wasserlöchern vorgesehen.

Ausgehend von der WO 01/96768 A1 ist es die Aufgabe der vorliegenden Erfindung eine entsprechende Zylinderkopf-Flachdichtung in der weise zu verbessern, dass sie eine übermäßige Verformung des Zylinderkopfes aufgrund der Schraubenkräfte wirksam und kostengünstig verhindert. Diese Aufgabe wird erfindungsgemäß gelöst durch eine Zylinderkopf-Flachdichtung mit den Merkmalen des Anspruchs 1. Vorteilhafte Weiterbildungen der erfindungsgemäßen Flachdichtung ergeben sich aus den Unteransprüchen.

Erfindungsgemäß wird somit ein zweiter Verformungsbegrenzer vorgeschlagen, der entweder im Bereich der Umfangskante und/oder im Bereich der mindestens einen weiteren Durchgangsöffnung angeordnet ist. Es hat sich dabei als günstig erwiesen, wenn der zweite Verformungsbegrenzer in Form einer wellenförmigen Profilierung ausgebildet ist. Wenn darüber hinaus der erste, innere Verformungsbegrenzer ebenfalls als eine zumindest in einer der metallischen Lagen ausgebildete wellen- oder trapezförmige Profilierung vorgesehen ist, kann die äußere Profilierung im selben Arbeits-sehritt wie die innere Profilierung beispielsweise durch Einprägen gebildet werden, so dass für ihre Herstellung nur geringe zusätzlich Kosten anfallen. Grundsätzlich kann der erste Verformungsbegrenzer jedoch jede beliebige Form haben, d.h. beispielsweise durch Umbiegen einer Lage oder durch einen separaten Ring gebildet sein.

Vorzugsweise verläuft die äußere Profilierung in geringem Abstand zur Umfangskante der Flachdichtung. Es besteht dabei die Möglichkeit, dass die Profilierung abschnittsweise entlang der Quer- und Längskanten ausgebildet ist. Ebenso ist es aber denkbar, dass die Profilierung abschnittsweise entweder nur an mindestens einer Quer- oder mindestens einer Längskante vorhanden ist.

In einer anderen bevorzugten Ausführungsform wird die äußere Profilierung zumindest teilweise um die jeweiligen weiteren Durchgangsöffnungen herum gerührt.

Es ist auch möglich, die Profilierung in tangentialer Ausrichtung zu mindestens einer weiteren Durchgangsöffnung anzuordnen. Der zweite Verformungsbegrenzer ist dabei zur Durchgangsöffnung beabstandet.

Bei der erfindungsgemäßen Zylinderkopfdichtung ist die mindestens eine weitere Öffnung ein Schraubenloch oder ein Blindloch.

Die äußere Profilierung erstreckt sich vorzugsweise über zumindest eine Periode der Wellenform. wobei mit der Anzahl der Perioden die Druckfestigkeit zunimmt und hierdurch der Widerstand gegen übermäßige Verformungen in gewünschter Weise eingestellt werden kann. Der Begriff Wellenform schließt im Sinne dieser Patentanmeldung auch abgeflachte, trapezförmige Wellenprofile ein.

Wenn der zweite Verformungsbegrenzer nicht vorhanden wäre, würde eine Erhöhung des ersten Verformungsbegrenzers (Wellenprofil) auch eine Zunahme der im Zylinderkopf und im Zylinderblock erzeugte Vorspannung bedeuten, so dass es nicht möglich wäre, den Arbeitsbereich der Sicke frei zu wählen.

Durch die Verwendung des zweiten Verformungsbegrenzers, dessen Höhe geringer als die des ersten Verformungsbegrenzers ist, ist es jedoch möglich, Vorspannung und Verpressungsgrad unabhängig voneinander auf den jeweils gewünschten Wert einzustellen, da die Vorspannung nur von der Höhendifferenz der Verformungsbegrenzer und der Verpressungsgrad nur von der absoluten Höhe des ersten Verformungsbegrenzers abhängig sind.

Nach einer weiteren bevorzugten Ausführungsform wird deshalb vorgeschlagen, dass der zweite Verformungsbegrenzer eine geringere Höhe als der erste Verformungsbegrenzer hat. Dadurch können Zylinderkopf- und block unter einer geringeren Vorspannung gehalten werden, die durch entsprechende Wahl der Höhendifferenz der Verformungsbegrenzer beliebig eingestellt werden kann, so dass einerseits die Vorspannung so begrenzt ist, dass keine übermäßigen Verzüge oder gar Rissbildung auftreten können, andererseits jedoch so groß ist, dass die Dichtspaltbewegung begrenzt bleibt und der Verpressungsgrad sich im optimalen Bereich bewegt.

Die Erfindung wird im Folgenden anhand der in den Figuren dargestellten Ausführungsbeispiele näher erläutert. Es zeigen:
- Fig. 1: eine Draufsicht auf einen Teil einer Zylinderkopfdichtung für einen Vierzylindermotor,
- Fig. 1a: eine weitere Draufsicht auf einen Teil einer Zylinderkopfdichtung für einen Vierzylindermotor,
- Fig. 2: einen senkrechten Querschnitt durch einen Randbereich der Zylinderkopfdichtung entlang der Linie II-II in Fig. 1 in vergrößerter Darstellung,
- Fig. 2a: einen senkrechten Querschnitt durch einen Randbereich einer Variante der Zylinderkopfdichtung entlang der Linie II-II in Fig. 1 in vergrößerter Darstellung,
und
- Fig. 3: einen senkrechten Querschnitt durch einen Teil einer Flachdichtung, bei der der zweite Verformungsbegrenzer durch ein Wellen-profil in einer Lage der Dichtung in der Nähe der Schraubendurchgangsöffnung gebildet wird.

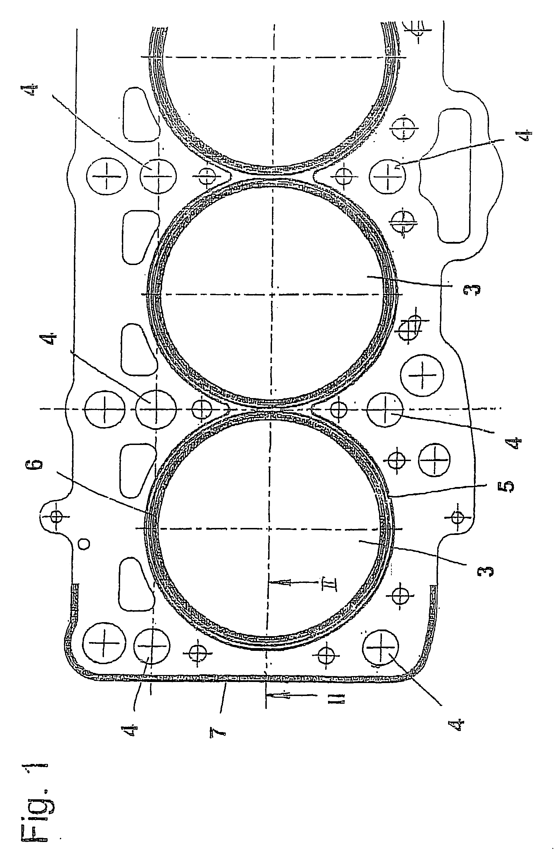

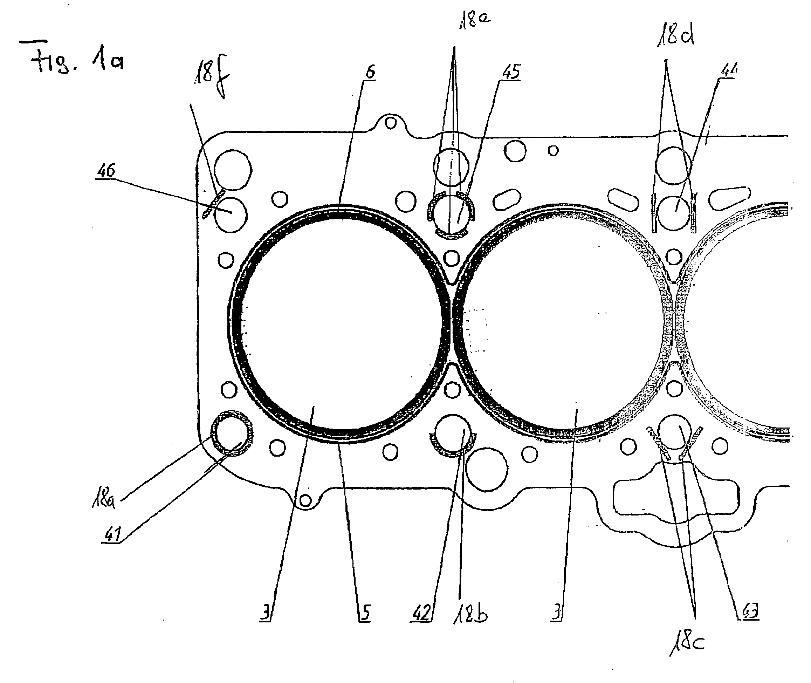

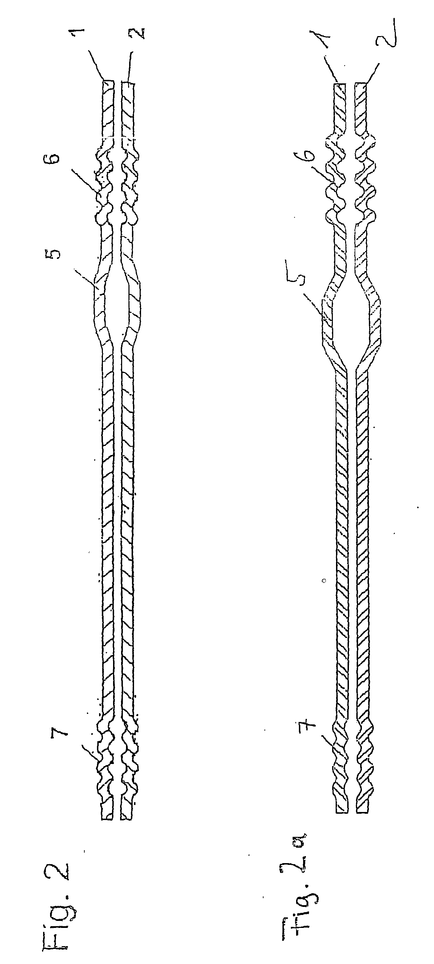

Die in den Figuren 1 und 2 dargestellte Zylinderkopfdichtung besteht aus zwei übereinander liegenden metallischen Lagen 1, 2, die mit diversen miteinander fluchtenden Durchgangsöffnungen 4 versehen sind, insbesondere Zylinderdurchgangsöffnungen 3, Schraubendurchgangsöffnungen sowie nicht gekennzeichneten Öffnungen für Kühlwasser, Öl, Stößel und Zentriermittel.

Die Dichtung weist für jede Zylinderdurchgangsöffnung 3 eine diese umgebende Sicke 5 auf, die gemäß Fig. 2 in beiden Lagen 1, 2 in der Weise ausgebildet ist, dass diese entgegengesetzt gerichtete Auswölbungen enthalten.

Weiterhin verläuft, wie aus der WO 01 /96768 Al bekannt ist, parallel zu jeder Sicke 5 in unmittelbarer Nähe von dieser auf der jeweils der Zylinderdurchgangsöffnung 3 zugewandten Seite eine innere Profilierung, die durch wellen- oder trapezförmige Einprägungen in den Lagen 1, 2 gebildet ist. Diese Profilierung kann auch nur in einer der Lagen 1, 2 vorgesehen sein. Diese Profilierung muss auch nicht wie die Sicke 5 vollständig umlaufen, sondern kann auch aus Ringsegmenten bestehen. Sie ist in ihrer Querrichtung vorzugsweise aus jeweils mehreren einander abwechselnden Wellenbergen und Wellentälern gebildet und hat durch ihre Form eine erheblich größere Steifigkeit als die Sicke 5, so dass sie als Verformungsbegrenzer 6 für diese wirken kann.

Am dargestellten Längsende (und ebenso am nicht dargestellten Längsende) weist die Zylinderkopfdichtung eine äußere Profilierung derart auf, dass sie von der benachbarten Zylinderdurchgangsöffnung 3 aus gesehen hinter den beiden endseitigen Schraubendurchgangsöffnungen 4 verläuft. Im gezeigten Ausführungsbeispiel verläuft die Profilierung 7 in enger Nähe und parallel zum Außenrand der Zylinderkopfdichtung, wobei sie sich über deren Stirnseite und auf beiden Seiten von dieser über jeweils ein kurzes Stück der Längsseite erstreckt. Weiterhin kann der Verlauf der Profilierung auch so gewählt sein, dass mindestens eine weitere Durchgangsöffnung, z.B. eine Schraubendurchgangsöffnung teilweise oder vollständig von ihr umgeben ist.

Die Profilierung besteht hier wie die Profilierung an den Zylinderdurchgangsöffnungen 3 aus wellenförmigen Einprägungen in den beiden Lagen, wobei diese hier ebenfalls aus mehreren Perioden gebildet sind. Die Einprägungen sind derart, dass die Wellenberge beider Lagen aneinander liegen; sie könnten jedoch auch so gestaltet sein, dass die Wellenberge der einen Lage in die Wellentäler der anderen Lage eingreifen. Diese Profilierung wird als zweiter Verformungsbegrenzer 7 bezeichnet.

Auch bei der Profilierung können, sich die Einprägungen in nur einer der Lagen 1, 2 befinden. Die Profilierung im Hinterland kann auch gänzlich anders gestaltet sein als die Profilierung um die Zylinderdurchgangsöffnungen 3. Generell gilt, dass die vorliegende Zylinderkopfdichtung eine beliebige Anzahl von Lagen, vorzugsweise eine bis sechs Lagen aufweisen kann, und dass die äußere Profilierung in beliebigen dieser Lagen und mit beliebiger Formgebung vorgesehen sein kann. Beispiele für die mögliche Anordnung und Ausbildung der äußeren Profilierung bei Zylinderkopfdichtungen mit unterschiedlicher Anzahl von Lagen zeigt die WO 01/96768 A1, dort allerdings für die innere Profilierung.

Es ist auch möglich, die Elastizität der Profilierung durch teilweises oder vollständiges Ausfüllen der Wellentäler z. B. mit elastomeren Material zu beeinflussen. Eine weitere Möglichkeit besteht darin, die Amplitude, die vorzugsweise im Bereich von 0,02 bis 0,2 mm liegt, und/oder die Abstände der Wellenberge innerhalb der Profilierung zu verändern, Darüber hinaus können die Wellenberge bis hin zu einer Trapezform abgeflacht sein und die Dicke der jeweiligen Lage kann im Bereich der Profilierung schwanken. Ebenfalls ist es möglich, diese Parameter der Profilierung parallel zu den Wellenbergen- bzw. tälern zu variieren.

Fig. 1a zeigt eine weitere Ausführungsform einer erfindungsgemäßen Dichtung, bei der die äußere Profilierung (Verformungsbegrenzer 7) nicht wie der Verformungsbegrenzer 7 in der Nähe der Außenkante, sondern in der Nähe der weiteren Durchgangsöffnungen als Verformungsbegrenzer 18 verläuft. Anhand der Schraubendurchgangsöffnungen 41 bis 46 werden verschiedene Ausführungsformen 18a-f für äußere Profilierungen an Durchgangsöffnungen beispielhaft dargestellt. Ebenso wie hier unterschiedliche Ausführungsformen für äußere Profilierungen kombiniert werden, ist es natürlich auch möglich, Profilparameter wie z.B. Wellenhöhen und -breiten zwischen den verschiedenen Durchgangsöffnungen zu variieren.

An der Schraubendruchgangsöffnung 41 ist eine näherungsweise konzentrisch und vollständig um die Schraubendurchgangsöffnung 41 umlaufende Profilierung 18a dargestellt. Das Wellenprofil kann hier hinsichtlich Höhe und Breite der Berge bzw. Täler von Periode zu Periode variieren. Ebenso ist es möglich, dass die Parameter umlaufend variieren.

An der Schraubendurchgangsöffnung 42 ist eine ebenfalls konzentrisch, aber nur partiell umlaufende Profilierung 18b dargestellt. Auch hier sind Variationen in den verschiedensten Wellenparametern möglich.

An der Schraubendurchgangsöffnung 43 verläuft die Profilierung 18c ebenfalls abschnittsweise, allerdings nicht konzentrisch, sondern beabstandet-tangential zur Schraubendurchgangsöffnung. Nur geringfügig unterscheidet hiervon sich die Profilierung 18d an der Schraubendurchgangsöffnung 44, die nicht komplett auf der von der Schraubendurchgangsöffnung abgewandten Seite, sondern parallel zum Steg zwischen den Brennräumen 3 verläuft. Hinsichtlich Variationen der Wellenparameter gilt dasselbe wie für die an den anderen Schraubendurchgangsöffnungen gezeigten Profilierungen.

Die Schraubendurchgangsöffnung 45 weist eine konzentrische Wellenprofilierung 18e auf, die nicht vollständig umläuft. Anders als bei der Schraubendurchgangsöffnung 42 weist die Wellenprofilierung Wellenprofilierung aber mehrere Kreissegmente auf. Es hat sich gezeigt, dass es vorteilhaft ist, wenn die Summe der Kreissegmente mindestens 1/6 des Kreisumfangs umfasst.

Als weiteres Beispiel für eine Profilierung an einer Schraubendurchgangsöffnung zeigt die Schraubendurchgangsöffnung 46 eine Profilierung 18f, die wie an den Öffnungen 43 und 44 beabstandet-tangential zur Öffnung verläuft. Hier weist die Profilierung allerdings nur ein einziges Segment auf. Wie bei den konzentrischen Wellenprofilierungen gilt, dass die Summe der mittleren Längen der linear verlaufenden Profilierungen mindestens 60° betragen muss.

Selbstverständlich können auch die an den Schraubendurchgangsöffnungen 45 und 46 gezeigten Profilierungen 18e und 18f Variationen in den Wellenparametern aufweisen.

Fig. 2a zeigt eine Variante zu Figur 2, bei der allerdings die Profilierung (Verformungsbegrenzer 6) auf der dem Brennraum zugewandten Seite der Sicke höher ist als die Höhe der Profilierung (Verformungsbegrenzer 7) auf der anderen Seite der Sicke.

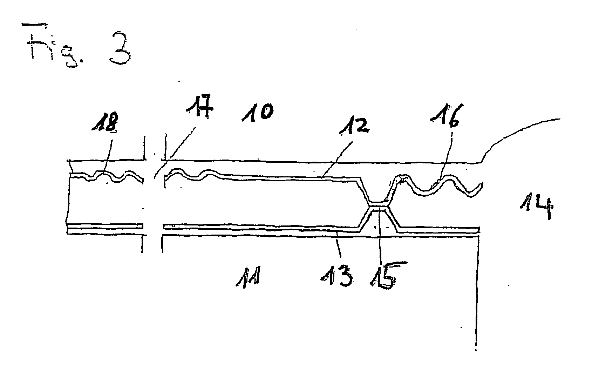

Die in Fig. 3 gezeigte Flachdichtung ist zwischen einem Zylinderkopf 10 und einem Zylinderblock 11 angeordnet und weist zwei Lagen 12, 13 aus Metall, vorzugsweise aus Federstahl, auf, die bis zu einem im Zylinderblock 11 ausgebildeten Brennraum 14 reichen und unter Bildung einer Zylinderdurchgangsöffnung um diesen herum geführt sind.

Die Dichtung weist für die Zylinderdurchgangsöffnung eine diese vollständig umgebende Sicke 15 auf, die in beiden Lagen 12, 13 und in der Weise ausgebildet ist, dass diese zueinander gerichtete Auswölbungen enthalten. Die Sicke 15 dient der Abdichtung des Brennraums und ist hierzu einer Druckkraft ausgesetzt, die einen bestimmten Mindestwert haben muss.

Parallel zu jeder Sicke 15 verläuft in unmittelbarer Nähe von dieser auf der jeweils dem Brennraum zugewandten Seite ein Wellenprofil, das durch eine wellenförmige Einprägung in der Lage 12 gebildet ist. Das Wellenprofil kann auch wie die Sicke 15 in beiden Lagen 12, 13 vorgesehen sein. Es braucht aber nicht wie die Sicke 15 vollständig umlaufend zu sein, sondern kann auch aus Ringsegmenten bestehen. Es ist in seiner Querrichtung aus jeweils vorzugsweise mehreren einander abwechselnden. Wellenbergen und Wellentälern gebildet und hat durch seine Form eine erheblich grö-ßere Steifigkeit als die Sicke, so dass es als Verformungsbegrenzer 16 für diese wirken kann.

Auf der dem Wellenprofil abgewandten Seite der Sicke 15 befindet sich in relativ großem Abstand von dieser eine Schraubendurchgangsöffnung 17 in der Dichtung, durch die eine nicht gezeigte Schraube hindurchgeführt ist, um den Zylinderkopf 10 auf dem Zylinderblock 11 zu befestigen und gleichzeitig die erforderliche Dichtkraft auf die Sicke 15 auszuüben. Die Dichtung weist in diesem Bereich in der Lage, die in Brennraumnähe eine wellenförmige Profilierung aufweist, ebenfalls eine wellenförmige Profilierung (Verformungsbegrenzer 18) auf. Wie aus der dargestellten Ausführungsform deutlich wird, ist es bevorzugt, wenn die Profilierung (Verformungsbegrenzer 16) in der Nähe des Brennraums eine größere Amplitude aufweist als die auf der dem Brennraum abgewandten Seite der Brennraumsicke 15. Wie eine zweite Profilierung in der Nähe der Außenkante 7 kann auch diese Profilierung 18 nur bereichsweise um die Schraubendurchgangsöffnung herum verlaufen. Die Summe der Winkelsegmente sollte dabei mindestens 1/6 des Kreisumfangs entsprechen. Weiter ist es selbstverständlich möglich, dass sich Amplitude, Abstand von Wellenbergen und/oder -tälern bzw. deren Länge umlaufend und/oder radial ändern. Wie bereits anhand der Profilierungen 18c, d, f an den Schraubendurchgangsöffnungen 43, 44 und 46 gezeigt, ist es dabei nicht notwendig, dass die Profilierungen konzentrisch verlaufen.

## Patentansprüche

1. Zylinderkopf-Flachdichtung mit mindestens einer metallischen Lage (1, 2, 12, 13), in der mindestens eine Zylinderdurchgangsöffnung (3) und mindestens eine weitere Durchgangsöffnung (4, 41-46) vorgesehen ist, wobei ein erster Verformungsbegrenzer (6, 16) zumindest bereichsweise um jeweils mindestens eine Zylinderdurchgangsöffnung herum und auf der der Zylinderdurchgangsöffnung abgewandten Seite des ersten Verformungsbegrenzers (6, 16) eine durchgehend um die Zylinderdurchgangsöffnung herum laufende Sicke (5, 15) zu Dichtzwecken ausgebildet ist,
**dadurch gekennzeichnet ,**
**dass** weiterhin auf der dem ersten Verformungsbegrenzer (6, 16) abgewandten Seite der Sicke (5, 15) im Bereich der Umfangskante und/oder der mindestens einen weiteren Durchgangsöffnung (4, 41-46) ein zweiter Verformungsbegrenzer (7, 18) vorgesehen ist, der in Form einer wellen- oder trapezförmigen Profilierung ausgebildet ist, wobei diese sich über mindestens eine Periode der Wellenform erstreckt.

2. Zylinderkopf-Flachdichtung nach Anspruch 1, **dadurch gekennzeichnet,**
**dass** der zweite Verformungsbegrenzer (7, 18) in Form einer äußeren, in ihrer Querrichtung wellen- oder trapezförmige Profilierung zumindest abschnittsweise in einem von der Zylinderdurchgangsöffnung (3) aus gesehen hinter der mindestens einen weiteren Durchgangsöffnung (4, 41-46) liegenden Bereich ausgebildet ist.

3. Zylinderkopf-Flachdichtung nach einem der Ansprüche 1 oder 2, **dadurch gekennzeichnet,**
**dass** die äußere wellen- oder trapezförmige Profilierung (Verformungsbegrenzer 7) mindestens abschnittsweise in geringem Abstand zur Umfangskante der Flachdichtung verläuft.

4. Zylinderkopf-Flachdichtung nach einem der Ansprüche 1 bis 3, **dadurch gekennzeichnet,**
**dass** die äußere Profilierung (Verformungsbegrenzer 7) jeweils an den Längsenden der Flachdichtung vorgesehen ist.

5. Zylinderkopf-Flachdichtung nach Anspruch 1, **dadurch gekennzeichnet,**
**dass** der zweite Verformungsbegrenzer (7, 18) in Form einer konzentrisch oder beabstandet mit tangentialer Ausrichtung zu einer zu ihm benachbarten weiteren Durchgangsöffnung (4, 41-46) verlaufenden wellen- oder trapezförmigen Profilierung ausgebildet ist.

6. Zylinderkopf-Flachdichtung nach Anspruch 5, **dadurch gekennzeichnet, dass** die äußere Profilierung (18a-f) zumindest teilweise um die jeweilige weitere Durchgangsöffnung (41-46) herumgeführt ist.

7. Zylinderkopf-Flachdichtung nach einem der Ansprüche 1 bis 6, **dadurch gekennzeichnet, dass** die weitere Durchgangsöffnung (4, 41-46) eine Schraubendurchgangsöffnung ist.

8. Zylinderkopf-Flachdichtung nach mindestens einem der Ansprüche 1 bis 7, **dadurch gekennzeichnet,**
**dass** die Wellenform abgeflachte Wellenberge bis hin zu einer Trapezform aufweist.

9. Zylinderkopf-Flachdichtung nach mindestens einem der Ansprüche 1 bis 8, **dadurch gekennzeichnet,**
**dass** die Wellenform unterschiedliche Höhen ihrer Wellenberge aufweist.

10. Zylinderkopf-Flachdichtung nach mindestens einen der Ansprüche 1 bis 9, **dadurch gekennzeichnet,**
**dass** zwischen benachbarten Wellenbergen einer Wellenform unterschiedliche Abstände bestehen.

11. Zylinderkopf-Flachdichtung nach mindestens einem der Ansprüche 1 bis 10, **dadurch gekennzeichnet,**
**dass** der zweite Verformungsbegrenzer (7, 18) dieselbe oder eine geringere Höhe als der erste Verformungsbegrenzer hat.

## Claims

1. A cylinder head flat gasket with at least one metallic layer (1, 2, 12, 13), in which at least one cylinder through-opening (3) and at least one further through-opening (4, 41-46) is provided, wherein a first deformation limiter (6, 16) is formed at least in regions around each of the at least one cylinder through-opening, and a bead (5,15) for sealing purposes and running continuously around the cylinder through-opening is formed on that side of the first deformation limiter (6, 16) which is distant to the cylinder through-opening, **characterised in that** furthermore a second deformation limiter (7, 18) is provided on that side of the bead (5,15) which is distant to the first deformation limiter (6, 16), in the region of the peripheral edge and/or of the at least one further through-opening (4, 41-46), said second deformation limiter being designed in the form of a wave-like or trapezoidal profiling, wherein this extends over at least one period of the wave shape.

2. A cylinder head flat gasket according to claim 1, **characterised in that** the second deformation limiter (7, 18) is designed in the form of an outer profiling which is wave-like or trapezoidal in its transverse direction, at least in sections in a region which seen from the cylinder through-opening (3) lies behind the at least one further through-opening (4, 41-46).

3. A cylinder head flat gasket according to one of the claims 1 or 2, **characterised in that** the outer wave-like or trapezoidal profiling (deformation limiter 7) at least in sections runs at a slight distance to the peripheral edge of the flat gasket.

4. A cylinder head flat gasket according to one of the claims 1 to 3, **characterised in that** the outer profiling (deformation limiter 7) is provided at each of the longitudinal ends of the flat gasket.

5. A cylinder head flat gasket according to claim 1, **characterised in that** the second deformation limiter (7, 18) is designed in the form of a wave-like or trapezoidal profiling running concentrically or distanced with a tangential orientation to a further through-opening (4, 41-46) adjacent to it.

6. A cylinder head flat gasket according to claim 5, **characterised in that** the outer profiling (18a-f) at least partly is led around the respective further through-opening (41-46).

7. A cylinder head flat gasket according to one of the claims 1 to 6, **characterised in that** the further through-opening (4, 41-46) is a screw through-opening.

8. A cylinder head flat gasket according to at least claims 1 to 7, **characterised in that** the wave shape comprises truncated wave peaks up to a trapezoidal shape.

9. A cylinder head flat gasket according to at least one of the claims 1 to 8, **characterised in that** the wave shape has different heights of its wave peaks.

10. A cylinder head flat gasket according to at least one of the claims 1 to 9, **characterised in that** different distances exist between adjacent wave peaks of a wave shape.

11. A cylinder head flat gasket according to at least one of the claims 1 to 10, **characterised in that** the second deformation limiter (7, 18) has the same or a smaller height than the first deformation limiter.

## Revendications

1. Joint d'étanchéité plat pour culasse comportant au moins une couche métallique (1, 2, 12, 13), dans lequel il est prévu au moins une ouverture de passage de cylindre (3) et au moins une autre ouverture (4, 41 à 46), un premier limiteur de déformation (6, 16) étant réalisé au moins par zones autour de la ou de chaque ouverture de passage de cylindre et une nervure (5, 15) passant entièrement autour de l'ouverture de passage de cylindre étant réalisée sur le côté du premier limiteur de déformation (6, 16) opposé à l'ouverture de passage de cylindre,
**caractérisé en ce que**
sur le côté de la nervure (5, 15) opposé au premier limiteur de déformation (6, 16), dans la zone du bord périphérique et/ou de la au moins un autre ouverture de passage (4, 41 à 46), est prévu un deuxième limiteur de déformation (7, 48) qui est réalisé sous la forme d'un profilage ondulé ou trapézoïdal, ce dernier s'étendant sur au moins une période de la forme ondulée.

2. Joint de culasse plat selon la revendication 1, **caractérisé en ce que** le deuxième limiteur de déformation (7, 18) est réalisé sous la forme d'un profilage extérieur ondulé ou trapézoïdal dans son sens transversal au moins par segments dans un zone se trouvant derrière la au moins une autre ouverture de passage (4, 41 à 46) vu de l'ouverture de passage de cylindre (3).

3. Joint de culasse plat selon une des revendications 1 ou 2, **caractérisé en ce que** le profilage extérieur ondulé ou trapézoïdal (limiteur de déformation 7) passe au moins par segments à une faible distance du bord périphérique du joint plat.

4. Joint de culasse plat selon une des revendications 1 à 3, **caractérisé en ce que** le profilage extérieur (limiteur de déformation 7) est prévu au niveau de chaque extrémité longitudinale du joint plat.

5. Joint de culasse plat selon la revendication 1, **caractérisé en ce que** le deuxième limiteur de déformation (7, 18) est réalisé sous la forme d'un profilage ondulé ou trapézoïdal passant concentriquement ou à distance avec une orientation tangentielle par rapport à une autre ouverture de passage (4, 41 à 46) qui lui est adjacente.

6. Joint de culasse plat selon la revendication 5, **caractérisé en ce que** le profilage extérieur (18a à 18f) est placé au moins en partie autour de chaque autre ouverture de passage (41 à 46).

7. Joint de culasse plat selon une des revendications 1 à 6, **caractérisé en ce que** l'autre ouverture de passage (4, 41 à 46) est une ouverture de passage de vis.

8. Joint de culasse plat selon au moins une des revendications 1 à 7, **caractérisé en ce que** la forme ondulée présente des crêtes d'ondulation aplaties jusqu'à une forme trapézoïdale.

9. Joint de culasse plat selon au moins une des revendications 1 à 8, **caractérisé en ce que** la forme ondulée présente des hauteurs différentes quant à ses crêtes d'ondulation.

10. Joint de culasse plat selon au moins une des revendications 1 à 9, **caractérisé en ce qu'**il existe des écartements différents entre les crêtes d'ondulations adjacentes d'une forme ondulée.

11. Joint de culasse plat selon au moins une des revendications 1 à 10, **caractérisé en ce que** le deuxième limiteur de déformation (7, 18) présente une hauteur égale ou inférieure à celle du premier limiteur de déformation.
